# EUROPEAN PATENT SPECIFICATION

(11) **EP 2 427 256 B1**
(45) Date of publication and mention of the grant of the patent: **16.10.2013**
(21) Application number: 10772322.3
(22) Date of filing: 28.04.2010
(51) Int. Cl.: B01D 53/08, B01D 53/50, B01D 53/83

(54) **REACTION VESSEL FOR FLUE GAS CLEANING**
REAKTIONSGEFÄSS FÜR RAUCHGASREINIGUNG
CUVE DE RÉACTION POUR NETTOYER UN GAZ DE COMBUSTION

(30) Priority: 05.05.2009 SE 0900603
(43) Date of publication of application: 14.03.2012
(73) Proprietor: Fagersta Intervex AB, 722 26 Västerås (SE)
(72) Inventor: TIBERG, Lars, S-774 94 Söderbärke (SE)
(74) Representative: Aslund, G Roland
(86) International application number: PCT/SE2010/000107
(87) International publication number: WO 2010/128920

(56) References cited:
- EP-A1- 0 198 133
- WO-A1-96/37287
- WO-A1-02/085497
- US-A- 3 708 981

## Description

### Technical field

The present invention relates to a reaction vessel for cleaning of flue gases including:
a supply pipe for granular reactant, which protrudes down into the vessel and creates an internal slide cone, a number of concentric funnels with the smallest funnel on top giving a sloping reaction bed with an essentially even thickness and making the reaction bed move slowly downwards into the funnels, and flue gas supply ducts above the funnels for an even distribution of flue gas to the bottom of the reaction bed.

### Background techniqne

At coal fired power plants for example, vast amounts of flue gas containing harmful elements e.g. sulphur oxides, are formed. The harmful elements ought to be removed before the flue gas is let out into the atmosphere. This process can be performed in a counterflow process in a reaction bed which is slowly transported downwards and is replaced by fresh reaction material for example granular limestone. A plant of this kind is described in WO 02085497 A1.

EP 0198133 discloses a cylindrical reaction vessel with a vertical row of flue gas inlets. The gas inlets have steeply sloping vanes to avoid the granular material to fall out of the reaction vessel and to avoid accumulation of dust.

### Object of the invention and brief description of the invention

It is an object of the invention to increase the efficiency of the process by a more even downward movement of the bed material and a more even utilisation of this material in a reaction vessel of this kind. This is reached by steeply sloping guide vanes leading from the top edges of the funnels towards the respective underlying funnel to give a narrow circular opening to the underlying funnel. The invention is defined by the claims.

### Brief description of the drawings.

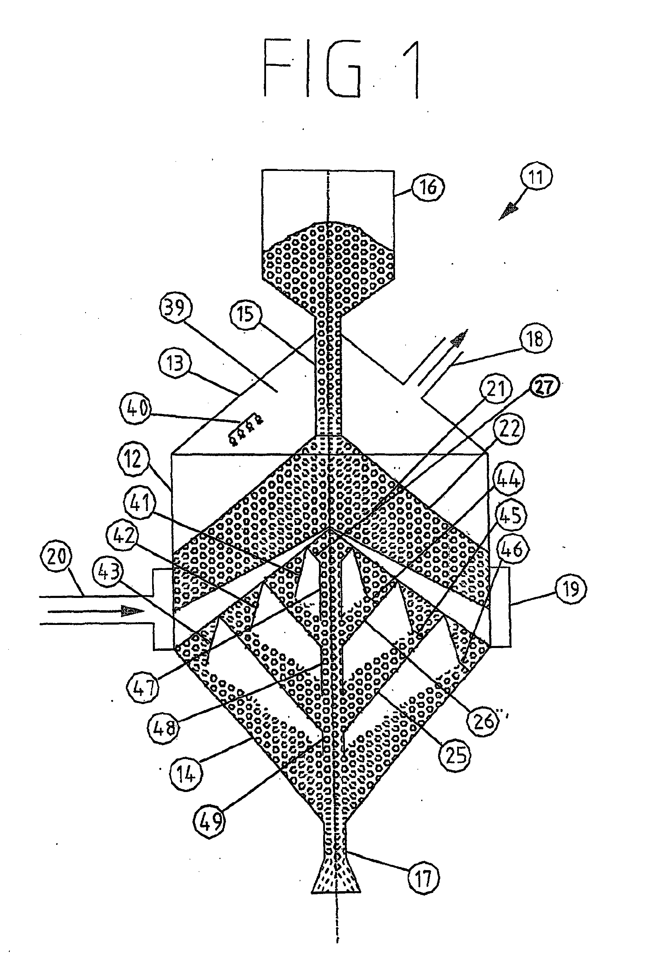

**Fig 1** is a section through a reaction vessel according to the invention as an example thereof.

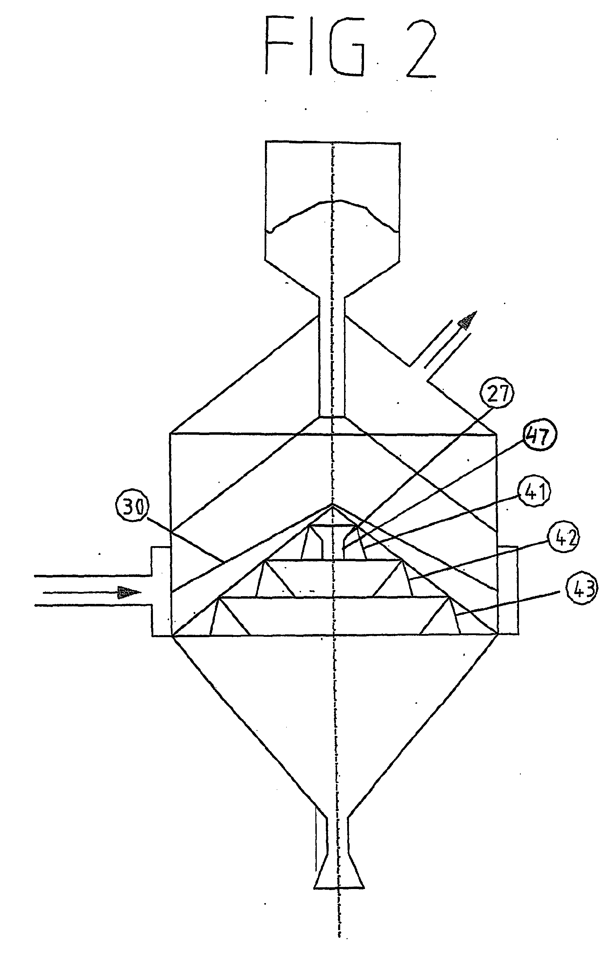

**Fig 2** corresponds to Fig 1 but shows the reaction vessel empty and shows internal details,
which are shown in fig 1, from the outside instead of in section.
**Fig 3** is a section along the line 3-3 in fig 2, but it shows only some details.
**Fig 4** is an enlarged cross section along the line 4-4 in fig 3.

### Description of the illustrated and preferred example of the invention

The figures show a reaction vessel 11 with a cylindrical part 12, a conical top part 13 and a conical bottom part 14. The top of the vessel has a supply pipe 15 which protrudes downwards into the vessel and is connected to a hopper 16 for bed material which can be granular limestone with the finest fraction sieved away to improve the permeability of the bed. In the conical bottom part of the reaction vessel there is an outlet 17 for used material and in the conical top part there is an outlet 18 for for cleaned flue gas. Around the cylindrical part 12 there is a circular distribution duct 19 with en entrance 20 for flue gas to be cleaned.

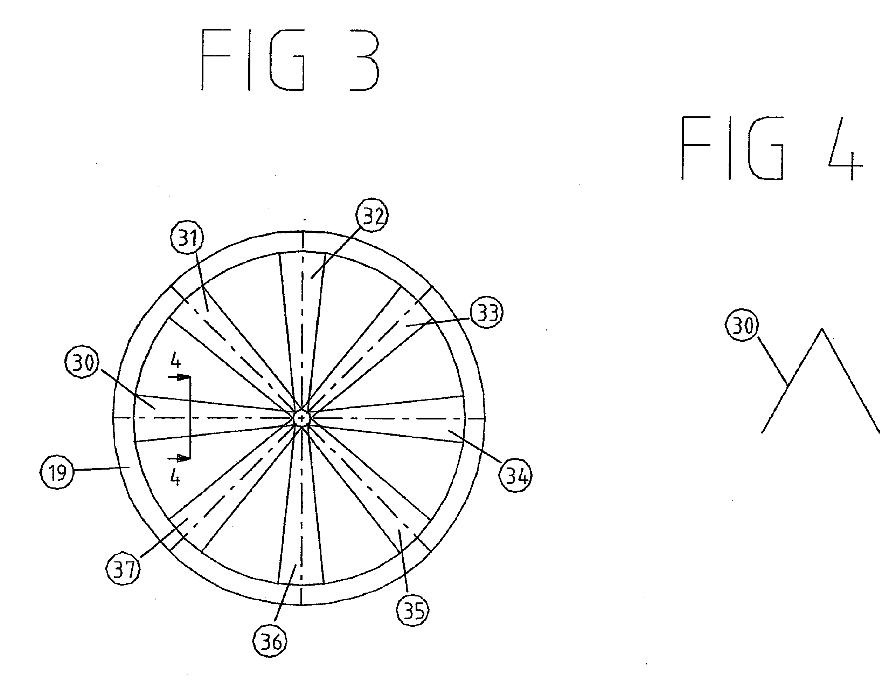

A slide cone 22 is filled continuously from the supply pipe 15 and forms the reaction bed 21. The conical bottom part 14 with the exit 17 forms a funnel, and there are a further number of concentric funnels, shown as three funnels 25, 26 ,27 with decreasing size and placed to make their top edges lie along a cone which is essentially parallel to the slide cone 22. Just on top of the funnels 25,26,27, there are a number of radial and sloping distribution ducts 30-37 in the form of upside down V:s which are coupled to the distribution duct 19. One such V-shaped duct is shown as a section on figure 4. The cross section of the V-shaped ducts decreases towards the centre of the vessel and under the V, the flue gas can flow to distribute the gas evenly in the reaction bed 21 that is formed between the V-shaped ducts and the slide cone 22. As a consequence, the reaction bed gets an even thickness over its whole surface. The bed could for instance be around 3 m thick.

Above the bed 38, an empty space 39 is formed and in this space, a number of spray nozzles 40 are installed to give an evenly distributed spray flow over the bed surface. The spray water moistens the stone surface where the reaction takes place, and makes the exiting cleaned flue gas dust free.

The conical bottom part 14 of the vessel forms a funnel, and circular guide vanes 41, 42, 43 are attached to the upper edge of each one of the funnels 25, 26, 27 and slope steeply towards the respective underlying funnel 26, 27, 14 so as to form narrow circular openings 44, 45, 46 for the passage of the bed material to the underlying funnel. The guide vanes 41, 42, 43 make the bed flow more evenly downwards, and the bed is renewed in the same rate over the whole cross section of the vessel which improves the cleaning of the flue gases. The funnels 25, 26, 27, 14 should have a somewhat higher slope angle than the slide angle of the stone material, for instance about 50 degrees to the horizontal plane, whereas the guide vanes should have a slope angle of about 10 degrees to the vertical plane.

The funnels 25, 26, 27 end in outlet pipes 47, 48, 49, and the length and diameter of these outlet pipes are designed to let the flow of reactant from each outlet be proportional to the area that the corresponding funnel exposes towards the bed. In this way, the downward flow velocity will be the same in all the funnels.

In the reaction bed, the limestone surfaces react with the sulphur oxides from the flue gases forming gypsum and a smaller portion of calcium sulphite and the outgoing gas will be free from sulphur compounds. The used reactant from the outlet 17 is returned to the hopper 16 after being cleaning and/or sieved to get a clean surface.

## Claims

1. Reaction vessel for cleaning of flue gases including:
a supply pipe (15) for granular reactant, which protrudes down into the vessel and creates an internal slide cone 22,
a number of concentric funnels (25, 26, 27, 14) with the smallest funnel (27) on top creating a sloping reaction bed (21) with an essentially even thickness and making the reaction bed move slowly downwards into the funnels, and
flue gas supply ducts (30-37) above the funnels for an even distribution of flue gas to the bottom of the reaction bed,
**characterised by**
steeply sloping guide vanes (41-43) leading from the top edges of the funnels towards the underlying funnels to give a narrow circular opening to the respective underlying funnel.

## Patentansprüche

1. Reaktionsgefäß für Rauchgasreinigung, aufweisend:
ein Zulaufrohr (15) für einen körnigen Reaktanten, das nach unten in das Gefäß hineinragt und einen inneren Rutschkegel 22 erzeugt,
mehrere konzentrische Trichter (25, 26, 27, 14) mit dem kleinsten Trichter (27) oben, wodurch ein geneigtes Reaktionsbett (21) mit einer im Wesentlichen gleichmäßigen Dicke entsteht und sich das Reaktionsbett langsam nach unten in die Trichter bewegt, und
Rauchgas-Zuleitungen (30-37) über den Trichtern für eine gleichmäßige Verteilung von Rauchgas zum Boden des Reaktionsbetts,
**gekennzeichnet durch**
stark geneigte Leitschaufeln (41-43), die von den Oberkanten der Trichter in Richtung der darunterliegenden Trichter führen, sodass eine enge kreisförmige Öffnung in den jeweiligen darunterliegenden Trichter entsteht.

## Revendications

1. Cuve de réaction pour nettoyer des gaz de combustion, comprenant :
un tuyau d'alimentation (15) pour un réactif granulaire, qui dépasse vers le bas dans la cuve et crée un cône de glissement interne 22,
plusieurs entonnoirs concentriques (25, 26, 27, 14) avec l'entonnoir le plus petit (27) en haut créant un lit de réaction incliné (21) avec une épaisseur essentiellement homogène et amenant le lit de réaction à se déplacer lentement vers le bas dans les entonnoirs, et
des conduites d'alimentation en gaz de combustion (30-37) au-dessus des entonnoirs pour une distribution homogène de gaz de combustion jusqu'au fond du lit de réaction,
**caractérisée par**
des aubes de guidage inclinées en pente raide (41-43) conduisant des bords supérieurs des entonnoirs aux entonnoirs sous-jacents pour conférer une ouverture circulaire étroite à l'entonnoir sous-jacent respectif.
